# EUROPEAN PATENT APPLICATION

(11) **EP 4 596 473 A1**
(43) Date of publication of application: **06.08.2025**
(21) Application number: 25151862.7
(22) Date of filing: 14.01.2025
(51) Int. Cl.: B65H 19/14, B65H 19/18, B65H 20/34, H01M 4/14

(54) **METHOD AND SYSTEM FOR JOINING STRIPS OF BATTERY GRID**

(30) Priority: 31.01.2024 GB 202401264
(71) Applicant: TBS Engineering Limited, Brockworth, Gloucester GL3 4AQ (GB)
(72) Inventor: SHARPE, Steve, Gloucester (GB)
(74) Representative: Wynne-Jones IP Limited

(57) **Abstract**

A method and system for joining strips (40, 52) of battery grid comprises feeding a first strip (40) of battery grid from a feed point (44) into a processing station (46) at a predetermined feed rate, and progressively increasing the path length of the first strip (40) between the feed point (44) and the processing station (46) until a target path length is reached. When the end of the first strip (40) in the first supply is reached, the path length of the first strip between the feed point and the processing station is progressively decreased while holding the end (50) of the first strip (40) at the feed point (44). The rate of decrease allows the first strip (40) to continue to be delivered into the processing station (46) at the predetermined feed rate. A second strip (52) is advanced from a second feed supply to a position adjacent the end of the first strip at the feed point. The adjacent ends are joined by laser welding. The decreasing of the path length is stopped, and the second strip (52) of battery grid is fed into the processing station at the predetermined feed rate.

## Description

### Technical Field

This invention relates to processing of battery grid material foe use in lead acid batteries. In particular, the invention relates to a method and system for joining strips of battery grid together.

### Background

Lead acid batteries are formed from a series of electrode plates in an electrolyte. The plates are formed from a lead alloy grid to which an electrode paste is applied. The grid can be an expanded grid, perforated grid, or any other form of grid commonly used in lead acid batteries. The lead alloy is relatively soft and so can easily be damaged when handled. The lead alloy grid is typically provided as a rolled strip which is processed by applying the paste and cutting to size to form the plates. This process is usually automated, with the grid material being unwound from the roll as a strip and fed to a processing station.

When the end of the roll is reached, processing stops and the end of a new strip from a new roll is connected to the tail end of the old strip. Processing is then resumed until the end of the new roll is reached. An example of a process of thus type is described below.

Connecting the ends of the strips is currently a manual process. It is also time consuming. A typical procedure to connect the two ends manually will take 4-5 minutes and can occur about once per hour. The downtime needed and the need for manual activity adds cost to an otherwise fully automated process.

This invention aims to provide a process that can continue to run while rolls are changed and to provide a process that can be automated.

### Summary

A first aspect of the invention comprises a method of joining strips of battery grid, comprising:
feeding a first strip of battery grid from a first feed supply at a feed point into a processing station at a predetermined feed rate, wherein the processing station is separated from the feed point;
progressively increasing the path length of the first strip between the feed point and the processing station until a target path length is reached;
when the end of the first strip in the first supply is reached, progressively decreasing the path length of the first strip between the feed point and the processing station while holding the end of the first strip at the feed point, wherein the rate of decrease of the path length allows the first strip to continue to be delivered into the processing station at the predetermined feed rate;
advancing an end of a second strip from a second feed supply to a position adjacent the end of the first strip at the feed point;
joining the adjacent ends of the first and second strips by laser welding; and
stopping decreasing of the path length, and feeding the second strip of battery grid from the second feed supply at the feed point into the processing station at the predetermined feed rate.

The method can comprise, prior to joining the adjacent ends of the first and second strips by laser welding, laser cutting the adjacent ends of the first and second strips. This can be useful to ensure that the two ends are matched to allow better welding.

The first and second feed supplies can comprise first and second rolls of battery grid strip, and the step of feeding the first or second strip of battery grid at the feed point can comprises feeding the battery grid from the respective roll.

Increasing or decreasing the path length can comprises increasing or decreasing a deviation of the path of the grid strip from a direct path between the feed point and the processing station.

The method can further comprise repeating the steps for subsequent feed supplies.

A second aspect of the invention comprises a system for joining strips of battery grid, comprising:
a feeding mechanism configured to feed a first strip of battery grid from a first feed supply at a feed point into a processing station at a predetermined feed rate, wherein the processing station is separated from the feed point;
a compensation mechanism configured to progressively increase the path length of the first strip between the feed point and the processing station until a target path length is reached;
wherein the compensation mechanism is configured such that when the end of the first strip in the first supply is reached, the compensation mechanism progressively decreases the path length of the first strip between the feed point and the processing station and the feed mechanism is configured to hold the end of the first strip at the feed point, wherein the rate of decrease of the path length allows the first strip to continue to be delivered into the processing station at the predetermined feed rate;
wherein the feeding mechanism is configured to advance an end of a second strip from a second feed supply to a position adjacent the end of the first strip at the feed point;
the system further comprising a laser welder operable to join the adjacent ends of the first and second strips by laser welding; and
the compensation mechanism is further configured to stop decreasing the path length when the adjacent ends have been joined, and the feeding mechanism is configured to feed the second strip of battery grid from the second feed supply at the feed point into the processing station at the predetermined feed rate.

The system can further comprise a laser cutter for cutting the adjacent ends of the first and second strips.

Further aspect of the invention will be apparent from the drawings and description.

### Brief Description of Drawings

Figure 1 shows part of a strip of battery grid.
Figure 2 is a schematic view of a first stage of an existing process for joining strips of battery grid.
Figure 3 is a schematic view of a second stage of an existing process for joining strips of battery grid.
Figure 5 is a schematic view of a third stage of an existing process for joining strips of battery grid.
Figure 6 is a schematic view of a first stage of a process for joining strips of battery grid according to an embodiment of the invention.
Figure 7 is a schematic view of a second stage of the process for joining strips of battery grid according to an embodiment of the invention.
Figure 8 is a schematic view of a third stage of the process for joining strips of battery grid according to an embodiment of the invention.

### Detailed Description

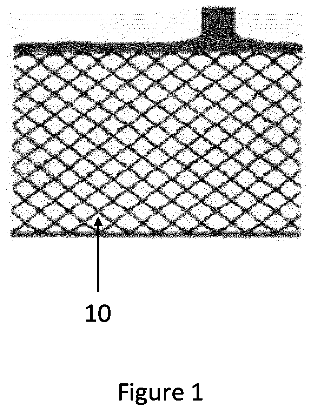

Figure 1 shows a plan view of part of a strip of battery grid material 10. In this example, the grid is an expanded grid, although other grid forms are possible. The grid is formed of a lead alloy and is typically provided in the form of rolls from which the gris is led to be processed.

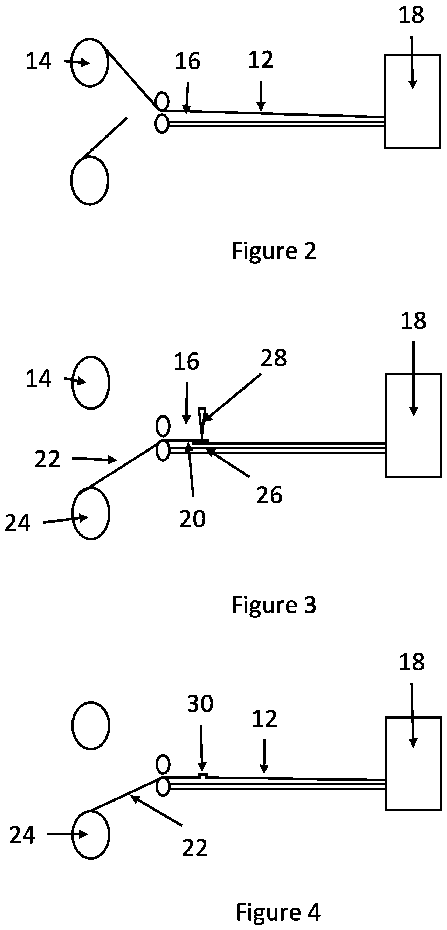

Figures 2-4 illustrate a known process for handling battery grid. In this process. Strip 12 is fed from a first roll 14 via a feed point 16 to a processing station 18 (Figure 2). When the end of the roll 14 is reached, feed to the processing station 18 is stopped. The end 20 of the strip 22 from a second roll 24 is fed to the feed point 16 to overlie the tail end 26 of the first strip 12. A blade 28 is then used to cut through both ends 20, 26 (Figure 3). The cut ends of the first and second strips 12, 22 are then aligned and connected by means of tape 30 (Figure 4). Feed to the processing station 18 can then be resumed, drawing the strip of grid from the second roll 24.

As is noted above, this procedure can take 4-5 minutes and is typically needed once per hour, potentially leading to a downtime of about 7-10%.

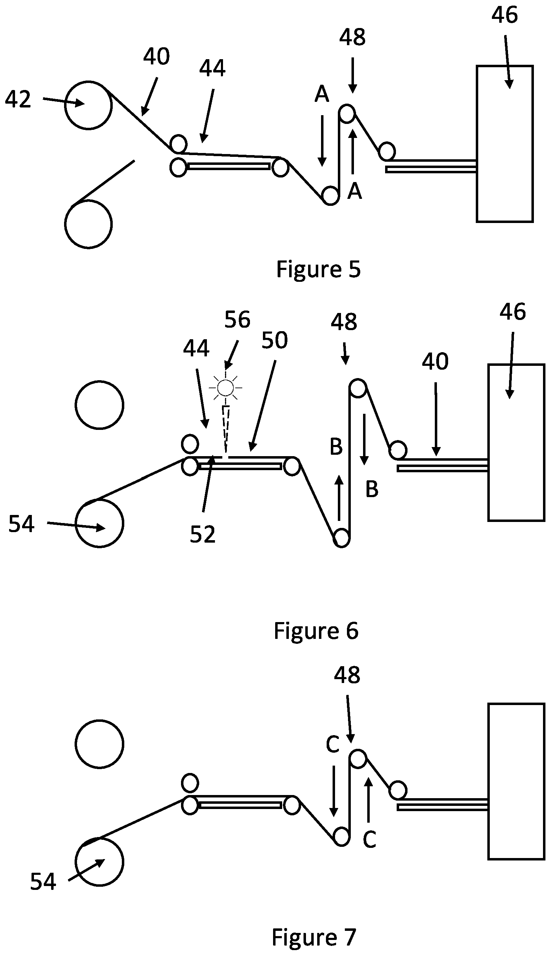

Figures 5-7 show schematically, a process and system according to an embodiment of the invention.

Similar to the process described above, before, Strip 40 is fed from a first roll 42 via a feed point 44 to a processing station 46 (Figure 5). However, rather than feeding directly from the feed point 44 to the processing station 46, the strip is lead through a compensation system 48 which acts on the strip between the feed point and the processing station to vary the path length of the strip 40. In the example of Figure 5, this involves deviating the strip 40 below and above the direct path. The compensation system 48 allows the amount that the path is deviated to be varied.

The processing station 46 is designed to operate at a predetermined feed rate for the strip 40. At the start of the run for the first roll 42, the amount of deviation will be relatively small. As the run progresses, the amount of deviation is progressively increased (arrows A-A). This means that the rate at which the strip 40 unrolls from the first roll 42 is slightly higher than the predetermined feed rate of the processing station.

The compensation system 48 can be configured so that it reaches the maximum deviation close to the time that the end of the first strip 40 leaves the roll 42. At this point, the tail end 50 of the first strip 40 is held at the feed point 44. In order to continue to supply the strip 40 to the processing station 46 at the predetermined rate, the compensation system 48 progressively decreases the deviation (arrows B-B), the rate of decrease being set to correspond to the predetermined feed rate.

While the compensation system 48 is operating to continue feed to the processing station, the end of a second strip 52 of battery grid is led from a second roll 54 to the feed point 44 so as to be positioned adjacent the tail end 50 of the first strip 40.

The two ends are then cut and joined by laser cutting/welding 56 (Figure 6). By use of an appropriate indexing system at the feed point 44 and configuration of the laser cutter/welder 56, this process can be conducted relatively quickly, possibly in the order of less than one minute.

Once the weld is complete, feed can then continue from the second roll 54 and the compensation system 48 can again operate to progressively increase the amount of deviation (arrows C-C) in preparation for the next changeover (Figure 7).

It will be appreciated that the drawings show a schematic view of the system and that particular aspects can be implemented in a number of ways. For example, the compensation system 48 effectively stores strip to allow continuous supply to the processing station. Any system that has this "buffering" effect is potentially useful for this purpose. Similarly, the exact details of how the ends of the strip from the rolls are taken up and led to the feeding station will depend on the specific feed system and presentation of the rolls. Other changes can be made within the scope of the invention.

## Claims

1. A method of joining strips of battery grid, comprising:
feeding a first strip of battery grid from a first feed supply at a feed point into a processing station at a predetermined feed rate, wherein the processing station is separated from the feed point;
progressively increasing the path length of the first strip between the feed point and the processing station until a target path length is reached;
when the end of the first strip in the first supply is reached, progressively decreasing the path length of the first strip between the feed point and the processing station while holding the end of the first strip at the feed point, wherein the rate of decrease of the path length allows the first strip to continue to be delivered into the processing station at the predetermined feed rate;
advancing an end of a second strip from a second feed supply to a position adjacent the end of the first strip at the feed point;
joining the adjacent ends of the first and second strips by laser welding; and
stopping decreasing of the path length, and feeding the second strip of battery grid from the second feed supply at the feed point into the processing station at the predetermined feed rate.

2. A method as claimed in claim 1, comprising, prior to joining the adjacent ends of the first and second strips by laser welding, laser cutting the adjacent ends of the first and second strips.

3. A method as claimed in claim 1 or 2, wherein the first and second feed supplies are first and second rolls of battery grid strip, and the step of feeding the first or second strip of battery grid at the feed point comprises feeding the battery grid from the respective roll.

4. A method as claimed in claim 1, 2, or 3, wherein increasing or decreasing the path length comprises increasing or decreasing a deviation of the path of the grid strip from a direct path between the feed point and the processing station.

5. A method as claimed in any preceding claim, further comprising repeating the steps of claim 1 for subsequent feed supplies.

6. A system for joining strips of battery grid, comprising:
a feeding mechanism configured to feed a first strip of battery grid from a first feed supply at a feed point into a processing station at a predetermined feed rate, wherein the processing station is separated from the feed point;
a compensation mechanism configured to progressively increase the path length of the first strip between the feed point and the processing station until a target path length is reached;
wherein the compensation mechanism is configured such that when the end of the first strip in the first supply is reached, the compensation mechanism progressively decreases the path length of the first strip between the feed point and the processing station and the feed mechanism is configured to hold the end of the first strip at the feed point, wherein the rate of decrease of the path length allows the first strip to continue to be delivered into the processing station at the predetermined feed rate;
wherein the feeding mechanism is configured to advance an end of a second strip from a second feed supply to a position adjacent the end of the first strip at the feed point;
the system further comprising a laser welder operable to join the adjacent ends of the first and second strips by laser welding; and
the compensation mechanism is further configured to stop decreasing the path length when the adjacent ends have been joined, and the feeding mechanism is configures to feed the second strip of battery grid from the second feed supply at the feed point into the processing station at the predetermined feed rate.

7. A system as claimed in claim 6, further comprising a laser cutter for cutting the adjacent ends of the first and second strips.
